Europäisches Patentamt

European Patent Office

Office européen des brevets

(11) Publication number: **0 188 393**
**B1**

# EUROPEAN PATENT SPECIFICATION

(45) Date of publication of the patent specification:
**24.05.89**

(51) Int. Cl.⁴: **G 01 F 23/28**, G 01 S 17/36

(21) Application number: **86400029.4**

(22) Date of filing: **08.01.86**

(54) **Liquid level height-measuring apparatus.**

(30) Priority: **09.01.85 JP 1879/85**

(43) Date of publication of application:
**23.07.86 Bulletin 86/30**

(45) Publication of the grant of the patent:
**24.05.89 Bulletin 89/21**

(84) Designated Contracting States:
**CH DE FR GB LI SE**

(56) References cited:
**EP-A- 0 117 574**
**EP-A- 0 135 423**
**WO-A-83/03135**
**DE-A- 2 630 789**

(73) Proprietor: **TOKYO KOGAKU KIKAI KABUSHIKI KAISHA, 75-1, Hasunuma-cho Itabashi-ku, Tokyo (JP)**

(72) Inventor: **Horikawa, Yoshio, c/o Tokyo Kogaku Kikai Kabushiki Kaisha 75-1, Hasunuma-cho Tokyo (JP)**
Inventor: **Kimura, Kazuaki, c/o Tokyo Kogaku Kikai Kabushiki Kaisha 75-1, Hasunuma-cho Tokyo (JP)**
Inventor: **Sugai, Hiroo, c/o Tokyo Kogaku Kikai Kabushiki Kaisha 75-1, Hasunuma-cho Tokyo (JP)**

(74) Representative: **Mongrédien, André et al, c/o SOCIETE DE PROTECTION DES INVENTIONS 25, rue de Ponthieu, F-75008 Paris (FR)**

ACTORUM AG

## Description

### Field of the invention

The present invention relates to a light wave distance-meter for measuring a distance up to an object to be distance-measured by using light waves. More specifically, the invention relates to a liquid level height-measuring apparatus for measuring a height of a liquid level to be distance-measured by using such a light wave distance-meter. This liquid level height-measuring apparatus is used for measuring a height of a level of crude oil in a crude oil tank.

### Background of the invention

The present applicant have previously disclosed a liquid level height-measuring apparatus using a light wave distance-meter in EP-A-135 423 (published 27.3.85; Japanese patent application No. 138 742/1983; title of the invention: Optical adaptor for light wave distance-meter, filed on July 30, 1983). This application exemplifies a crude oil level height-measuring apparatus for measuring a height of crude oil level in a crude oil tank. According to this apparatus, a light wave distance-meter main body with an electric system is installed in a control housing far from the crude oil tank; an objective optical means is arranged in the crude oil tank for irradiating measuring light waves upon the level of the crude oil as a level to be distance-measured and condensing reflected measuring light waves reflected by the level of the crude oil; the objective optical means and the light waves distance-meter main body are optically connected together by an optical fiber as a light wave transmission piping member; the distance-measuring light waves optically modulated at a given modulation frequency are generated from a distance-measuring light wave generating means of the light wave distance-meter main body; the distance-measuring light waves are led to the objective optical means through the optical fiber to irradiate the distance-measuring light waves upon the level surface of the crude oil; the reflected distance-measuring light waves reflected on the crude oil level surface are condensed by the objective optical means again; and the reflected distance-measuring light waves are led to a light receiving means of the light wave distance-meter main body through the optical fiber.

The height of the liquid level is measured based on a phase difference as a time lag between the distance-measuring light waves and reflected distance-measuring light waves. The above liquid level height-measuring apparatus is adapted to directly measure the distance to be measured including the whole length of the light wave transmission piping member. The height of the liquid level is determined by substracting the whole length of the light wave transmission piping member as a known physical amount from the measured distance.

However, as the crude oil tanks have been large-scaled and a number of the crude oil tanks have come to be concentratively controlled, the distance from the control housing to the respective crude oil tanks increases and the whole length of the light wave transmission piping member accordingly increases. Thus, it is necessary to employ from several ten to one hundred and several ten meters in length of the light wave transmission piping member.

However, with the increase in length of the light wave transmission piping member, expansion and contraction amounts due to temperature changes increases,so that the whole length of the light wave transmission piping member can no longer be regarded as the known physical amount, and errors in the measured distance take place due to the expansion and contraction of the light wave transmission piping member owing to temperature changes. The errors of the measured distance due to the expansion and contraction of the light wave transmission piping member owing to the temperature changes take place when a photoconductive wave pipe of a refraction and reflection optical system is employed as the light wave transmission piping member.

Further, since difference in the transmission distance between the distance-measuring light waves and the reflected distance-measuring light waves both transmitted inside of the optical fiber is proportional to the whole length of the whole length of the optical fiber, the phase difference between the distance-measuring light waves and the reflected light waves increases with the increase in length of the optical fiber due to the above proportional relation to produce errors in the measured distance. In addition, the phase difference between the distance-measuring light waves and the reflected light waves changes due to bent portions on way of the arranged optical fiber and bending thereof by wind, and errors of the measured distance induced thereby increases with increase in length of the optical fiber.

The present invention has been made taking the above-mentioned circumstances into consideration, and is amined at the provision of a liquid level height-measuring apparatus which can eliminate errors of measured distances due to increase in length of a light wave transmission piping member to the utmost.

These and other objects and advantages of the present invention will be well appreciated upon reading of the following description of the invention when taken in connection with the attached drawings with understanding that some modification, variations and changes of the invention could be easily done by the skilled in the art to which the invention pertains without departing from the scope of claim appended hereto.

### Summary of the invention

In order to attain the above object, the liquid level height-measuring apparatus according to the present invention is characterized in that a distance-measuring light wave generating means is adapted to generate distance-measuring light waves for measuring the liquid level height and distance-measuring light waves for measuring the length of a light wave transmission piping member both kinds of the distance-measuring light waves having different wavelengths, and an objective optical means is provided with a distance-measuring light wave selecting means adapted to lead the distance-measuring light waves for measuring the liquid level height to the surface of a liquid level to distance-measured, while leading the distance-measuring light waves for measuring the length of a light wave transmission piping member to a light wave receiving element as they are through the light wave transmission piping member.

As mentioned above, since length of the light wave transmission piping member is preliminarily measured as an unknown physical value in the measurement of the height of the liquid level, the present invention exhibits effects that the increase in distance-measuring error accompanied by the increase in the length of the light wave transmission piping member can be prevented so that enhanced accuracy in the measurement of the height of the liquid level can be further expected.

According to the liquid level height-measuring apparatus of the present invention, the length of the light wave transmission piping member is preliminarly measured by using the distance-measuring light waves for measuring the length of the light wave transmission piping member, and then a distance to be measured including the length of the light wave transmission piping member is measured by using distance-measuring light waves for measuring the liquid level height. Thereafter, the height of the liquid level can be measured by subtracting the preliminarly measured length of the light wave transmission piping member from the distance to be distance-measured including the length of the light wave transmission piping member to remove a distance-measuring error based on the length of the light wave transmission piping member. A similar apparatus is known from WO 8 303 135 where, however, a beam of light with a certain wave length is used. A beam splitter of the objective optical means above the liquid level directs a part of the input beam from a first optical fiber onto the liquid surface and through a second fiber back to the photodetector and transmits another unreflected part of the input beam through a third fiber back to said detector.

Brief description of the attached drawings

For better understanding of the invention, reference is made to the attached drawings, wherein:

Fig. 1 is a schematic view of illustrating an embodiment in which a liquid level height-measuring apparatus according to the present invention is employed as an apparatus for measuring the height of a liquid level in a crude oil tank;

Fig. 2 is a detailed view of illustrating a light wave distance-meter main body 1 and an objective optical system unit as shown in Fig. 1;

Fig. 3 is an optical system circuit view of an objective optical system unit of a second embodiment of the light level height-measuring apparatus according to the present invention; and

Fig. 4 to 6 are views illustrating a third embodiment of the liquid level height-measuring apparatus according to the present invention, Figs. 4 and 5 being optical system circuit views of an objective optical system unit thereof and Fig. 6 being a plane view of an objective lens shown in Fig. 4 and 5.

Description of the preferred embodiments

The liquid level height-measuring apparatus according to the present invention will be explained below with respect to a case of measuring a height of a level of crude oil in a crude oil tank thereby while referring to the attached drawings.

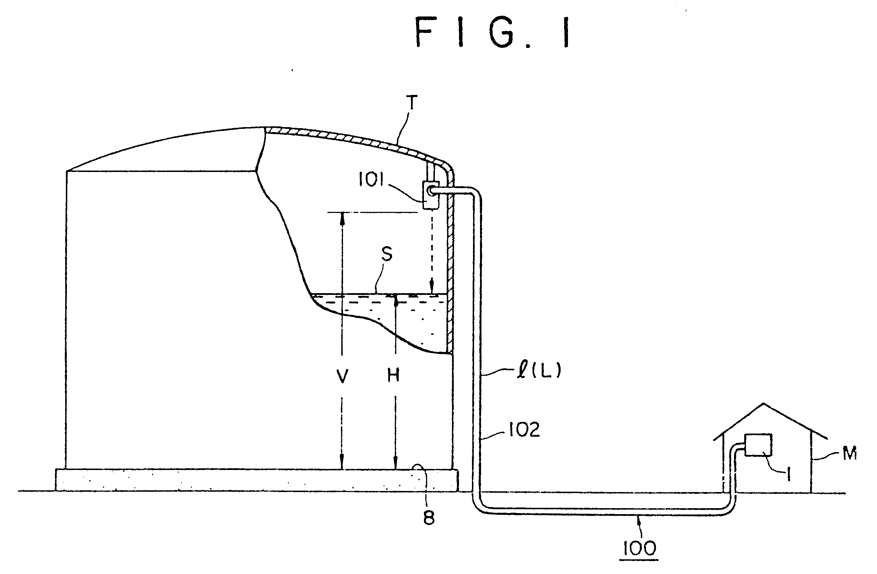

In Fig. 1, M and T show a control housing and a crude oil tank, respectively. The control housing M is installed apart far from the crude oil tank T from the explosion-avoiding standpoint of view. A light wave distance-meter main body 1 with an electric system is installed in the control housing M, and an objective optical system unit 101 as an objective optical means is hanged from the ceiling of the crude oil tank T. The objective optical system unit 101 has functions to irradiate distance-measuring light waves upon the level surface S of the crude oil as a liquid level to be distance-measured and condense the reflected distance-measuring light waves reflected on the liquid level surface S of the crude oil. The light wave distance-meter main pody 1 and the objective optical system unit 101 are optically connected together through an optical fiber 102 as a light wave transmission piping member. The liquid level heightmeasuring apparatus 100 is substantially constituted by the light wave distance-meter main body 1, the objective optical system unit 101 and the optical fiber 102.

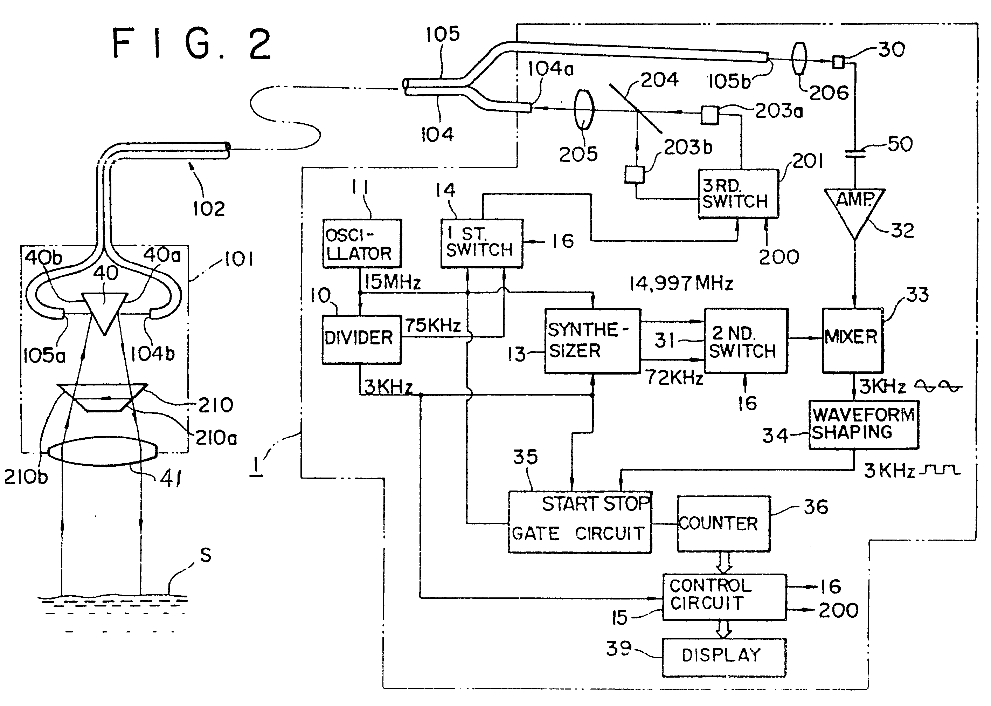

As shown in Fig. 2, the objective optical system unit 101 has an objective lens 41 which is faced with the crude oil level surface S. The light wave distance-meter main body 1 is provided with a distance-measuring light wave generating means for generating distance-measuring light waves optically modulated at a given modulation frequency and a light receiving means for receiving the reflected distance-measuring light waves led through the objective optical system unit 101. The optical fiber 102 consists of an outward optical fiber 104 optically connecting the distance-measuring light wave generating means to the objective optical system unit 101 and a return optical fiber 105 optically connecting the objective optical system unit 101 to the light receiving means. Reference numerals 104a and 105a indicate incident faces of the optical fibers 104 and 105, respectively, while reference numerals 104b and 105b indicate ejecting faces of the optical fibers 104 and 105, respectively.

An incident face 104a of the outward optical fiber 104 faces a lens 205, and an ejecting face 104b thereof faces a reflecting face 40a of a reflection prism 40. An incident face 105a of the return optical fiber 105 faces a reflecting face 40b of the reflection prism 40, and its ejecting face 105b faces a lens 206. The distance-measuring light wave generating means is provided with luminescent diodes 203a, 203b, which are adapted to generate distance-measuring light waves with different wavelengths, respectively. The luminescent diode 203a generates, for instance, near infrared rays of a middle wavelength of 820nm. The luminescent diode 203b generates, for example, near infrared rays of a middle wave length of 860 nm. The near infrared rays generated by the luminescent diode 203a are used as the distance-measuring light waves for measuring the length of the light wave transmission piping member. The near infrared rays generated by the luminescent diode 203b are used as the distance-measuring light waves for measuring the height of the liquid level.

The light wave distance-meter main body 1 is provided with an oscillator 11 an oscillating frequency of which is set at 15 MHz. Oscillating outputs of the oscillator 11 are inputted into a frequency divider 10, a synthesizer 13, a first switch 14 and a gate circuit 35. The frequency divider 10 has a function to frequency-divide the oscillating output of the oscillator 11 and generate an oscillation output of an oscillation frequency of 3 KHz and an oscillation output of an oscillation frequency of 75 KHz. A first switch 14 is used to make selection between the oscillation output of the oscillation frequency of 15 MHz and an oscillation output of the oscillation frequency of 75 KHz on the basis of a control signal 16 generated in a processing control circuit 15, and these oscillation outputs are used to optically modulate the respective kinds of the distance-measuring light waves. The oscillation output of the oscillation frequency of 15 MHz and the oscillation output of the oscillation frequency of 3 KHz are inputted to the synthesizer 13. Based on these oscillation outputs the synthesizer 13 has a function to generate an oscillation output of an oscillation frequency of 14.997 MHz (determined by a difference between 15 MHz and 0.003 MHz) and an oscillation output of an oscillation frequency of 72 KHz (24 folds of 3 KHz).

The oscillation output generated in the synthesizer 13 is inputted to a second switch 31, which is controlled on the basis of the control signal 16 generated from the processing control circuit 15. The oscillation output selected in the first switch 14 is inputted into a third switch 201 which has a function to make selection between a luminescent diode 203a and a luminescent diode 203b to be radiated on the basis of a control signal 200 generated in the processing control circuit 15. The distance-measuring light waves generated at the luminescent diode 203a penetrates a half mirror 204 to be led to a lens 205 by which the light waves are caused to form an image at an incident face 104a. The distance-measuring light waves generated at the luminescent diode 203b are reflected by the half mirror 204 to be led to the lens 205. The reflected distance-measuring light waves are caused to form an image at the incident face 104a by the lens 205. The half mirror 204 functions as a Dichroic mirror to permeate near infrared rays of a middle wavelength of 820 nm but reflect near infrared rays of a middle wavelength of 860 nm. The distance-measuring light waves led to the incident face 104a of an outward optical fiber 104 are transmitted within the outward optical fiber 104 to be led to an ejecting face 104b thereof. The light waves are ejected from the ejecting face 104b, are reflected at a reflecting face 40a of a reflection prism 40, and are led toward an objective lens 41.

The objective lens 41 is so arranged that the location of its a focal point may be optically in coincidence with the ejecting face 104b and an incident face 105a. A reflection prism 210 as a distance-measuring light wave selecting means is positioned between the reflection prism 40 and the objective lens 41 while being spaced therefrom at specific intervals. The reflection prism 210 is provided with a Dichroic mirror faces 210a and 210b. The Dichroic mirror face 210a has a function to reflect the light wave transmission piping member length-measuring/distance-measuring light waves of the middle wavelength of 820 nm but permeate the liquid level height-measuring distance measuring light waves with the middle wavelength 860 nm. The distance-measuring light waves for measuring the liquid level height are penetrated through the reflection prism 210 and are then converted into a parallel light beam by the objective lens 41. The parallel light beam is reflected at the liquid level surface S of crude oil to be converted to reflected distance-measuring light waves. The reflected distance-measuring light waves are collected by the objective lens 41 again and are penetrated through the reflection prism 210 to be led to the reflecting face 40b of the reflection prism 40. The reflected light waves are reflected again at the reflecting face 40b to be led to the incident face 105a of a return optical fiber 105 at which the light waves form an image. The distance-measuring light waves for measuring the height of the liquid level are transmitted within the return optical fiber 105 to be led to the ejecting face 105b there of and then ejected toward a lens 206. The lens 206 has a function to collect the distance-measuring light waves and cause the light waves to form an image at a light receiving face of a light receiving diode 30 constituting a part of a light receiving means. After the distance-measuring light waves for measuring the length of the light wave transmission piping member are ejected from the outward optical fiber 104, they are reflected at the Dichroic faces 210a and 210b of the reflection prism 210 and are led to the incident face 105a of the return optical fiber 105 as they are without passing through the objective lens 41. Then, these distance-measuring light waves are transmitted as reference distance-measuring light waves within the return optical fiber 105, and are caused to make an image at a light receiving face of a light receiving diode 30 by the lens 206. The light receiving diode 30 has a function to make photoelectric conversion of both the distance-measuring light waves of the middle wavelength of 820 nm and the distance-measuring light waves of the middle wavelength of 860 nm at substantially the same sensitivity.

A photoelectrically converted signal generated through this photoelectrical conversion is inputted into an amplifier 32 through a condenser 50, and an amplified signal thereof is inputted into a mixer 33. When the first switch 14 selects the oscillation output of 15 MHz, the oscillation output of 14.997 MHz is inputted to the mixer 33 from the second switch 31, while when the first switch 14 selects the oscillation output of 75 KHz, the oscillation output of 75 KHz is inputted to the mixer 33 from the second switch 31. The control signal 16 generated at the processing control circuit 15 has a function to select oscillation outputs generated from the second switch 31, too. The mixer 33 is to form a sinusoidal wave-like beat signal of a frequency of 3 KHz on the basis of the oscillation output from the second switch 31 and the photoelectrically converted signal from the amplifier 32. The sinusoidal wave-like beat signal is inputted into a waveform shaping device 34 where the beat signal is converted to a rectangular wave signal of a frequency of 3 KHz.

To a gate circuit 35 are inputted an oscillation output of a frequency of 3 KHz generated at the frequency divider 10 as a start signal as well as the rectangular wave signal generated at the waveform shaping device 34 as a stop signal. The gate circuit 35 starts to pass the oscillation output of the frequency of 15 MHz on the basis of the start signal and stop passing of the oscillation output of the frequency of 15 MHz on the basis of the stop signal. The gate circuit 35 is connected to a counter 36, which has a function to count the pulse number of the outputs having 15 MHz that pass the gate circuit 35 from the inputting of the start signal to the inputting of the stop signal. The phase difference based on the distance-measuring light waves and the reflected distance-measuring light waves is measured through the counting of the counter 36. In this case, the counter 36 measures the phase difference at N times. The processing control circuit 15 determines the average valve of the phase differences measured at N times, calculates liquid level-measured data through a predetermined calculation processing explained below, and make a display thereof at a display 39. The height of the liquid level H is determined by the formula: $H = V - (L - l)$ in which l, L and V are the average value of the total lengths of the light wave transmission piping member 102 measured by the light wave transmission piping member length-measuring/distance-measuring light waves, the average value of the distances measured by the liquid level height-measuring/distance-measuring light waves, and the distance from the tip of the objective lens optical system unit 101 to the bottom surface B of the crude oil tank, respectively.

The oscillation output of 15 MHz as the optically modulated frequency corresponds to a modulated light wave of a wavelength of 20 m and is used for the fine measurement with an accuracy in which a range of the distance to be measured is not more than 10 m. The oscillation output of 75 KHz as the optically modulated frequency corresponds to a modulated light wave of a wavelength of 4 Km, and is used for a rough measurement in which the range of the distance to be measured is not less than 2 Km. By combining both the measurement data, the height of the liquid level of a large scale of the crude oil tank T having not less than 10 m in height can be measured at a high accuracy of 1 mm unit.

Measuring steps of the crude oil liquid level height-measuring apparatus according to the illustrated embodiment of the invention will be explained below.

(1) In the case of the fine measurement:

(a) Reference mode:

Step 1: On the basis of the control signals 16 from the processing control circuit 15, the first switch 14 is made to select the oscillation output of the oscillation frequency of 15 MHz, and the second switch 31 is made to select the oscillation output of the oscillation frequency of 14.997 MHz.

Step 2: On the basis of the control signal 200 from the processing control circuit 15, the luminescent diode 203a is radiated by the third switch 201 to generate reference distance-measuring light waves of a middle wavelength of 820 nm.

Step 3: The reference distance-measuring light waves penetrates the half mirror 204 to be led to the outward optical fiber 104. The reference distance-measuring light waves are then transmitted within the outward optical fiber 104, and led to the return optical fiber 105 as they are after being reflected by the reflection prisms 40 and 210. Subsequently, they are transmitted within the return optical fiber 105, and are received by the light receiving diode 30.

Step 4: The mixer 33 generates the sinusoidal wave-like beat signal of an oscillation frequency of 3 KHz on the basis of the photoelectrically converted signal from the light receiving diode 30 and the oscillation output from the second switch 31.

Step 5: The sinusoidal wave-like beat signal is converted into a rectangular wave signal by the waveform shaping device 34.

Step 6: The gate circuit 35 starts the passing of the oscillation outputs of the oscillation frequency of 15 MHz in synchronization with the radiating of the luminescent diode 203a, and stops the passing of the oscillation outputs on the basis of the rectangular wave signal.

Step 7: The pulse number of the oscillation outputs is counted by the counter 36 to determine the phase difference.

Step 8: The count value counted in the counter 36 is converted into a distance datum by the processing control circuit 15, which distance datum is memoried as a datum of the total length of the light weve transmission piping member 102.

(b) Measuring mode of the liquid level height:

Step 9: On the basis of a control signal 200 from the processing control circuit 15, the third switch 201 is switched, the luminescent diode 203b is radiated, and the liquid level height-measuring/distance-measuring light waves of the middle wavelength of 860 nm are generated.

Step 10: These liquid level height-measuring/distance-measuring light waves are transmitted within the outward optical fiber 104, and are then led to the objective lens 41. Thereafter, the light waves are irradiated upon the liquid level surface S of crude oil, and the reflected distance-measuring light waves reflected by the liquid level surface S are collected by the objective lens 41 again and are received by the light receiving diode 30 after being transmitted within the return optical fiber 105.

Step 11: After taking the steps described in Step 4 to Step 8, a distance datum is memoried as a distance datum L, for a fine distance-measuring.

(2) In the case of rough measurement:

(a) Reference mode:

Step 12: The processing control circuit 15 makes the first switch 14 and the second switch 31 select the oscillation output of the frequency of 75 KHz and the oscillation output of 75 KHz an the basis of the control signals 16, respectively.

Step 13: By taking the steps described in Step 2 to Step 8, a datum $l_2$ on the total length is determined in the case of the rough measurement. The total length $l$ of the light wave transmission piping member is calculated from the datum $l_1$ of the total length in the fine measurement and the datum $l_2$ in the total length.

(b) Liquid level height measuring mode:

Step 14: By taking the steps described in Step 9 to Step 11, a datum $L_2$ of a distance to be measured is determined in the case of the rough measurement.

Step 15: A datum L of a distance to be measured including the length of the light wave transmitting piping member is determined on the basis of the datum $L_2$ on the distance to be measured in the case of the rough measurement and the datum $L_1$, of the distance to be measured in the case of the fine measurement.

Step 16: A datum H of the height of the liquid level of crude oil is determined by making the calculation based on the datum V of the distance, the measured datum L and the datum I of the total length, and the value of the height of the liquid level is displayed in the display 39 on the basis of the datum H of the height of the liquid level of the crude oil.

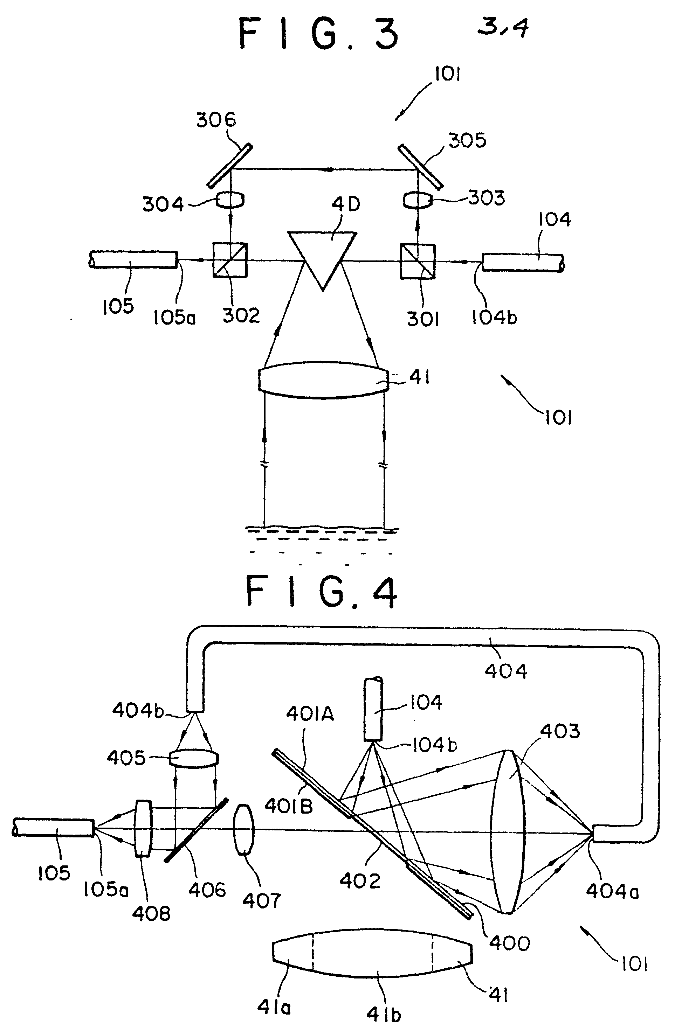

Fig. 3 is an optical system circuit view of an objective optical system unit 101 showing a second embodiment of the liquid level height-measuring apparatus according to the present invention. The distance-measuring light wave selecting member is constituted by Dichroic mirror 301 arranged between a reflection prism 40 and an outward optical fiber 104, a Dichroic mirror 302 arranged between the reflection prism 40 and a return optical fiber 105, and collimeter lenses 303 and 304 and reflection mirrors 305 ans 306 for leading the distance-measuring light waves reflected at the Dichroic mirror 301 to the Dichroic mirror 302. The Dichroic mirrors 301 and 302 have a function to penetrate the distance-measuring light waves for the measurement of the heigth of the liquid level but reflect the distance-measuring light waves for the mesurement of the length of the light wave transmission piping member.

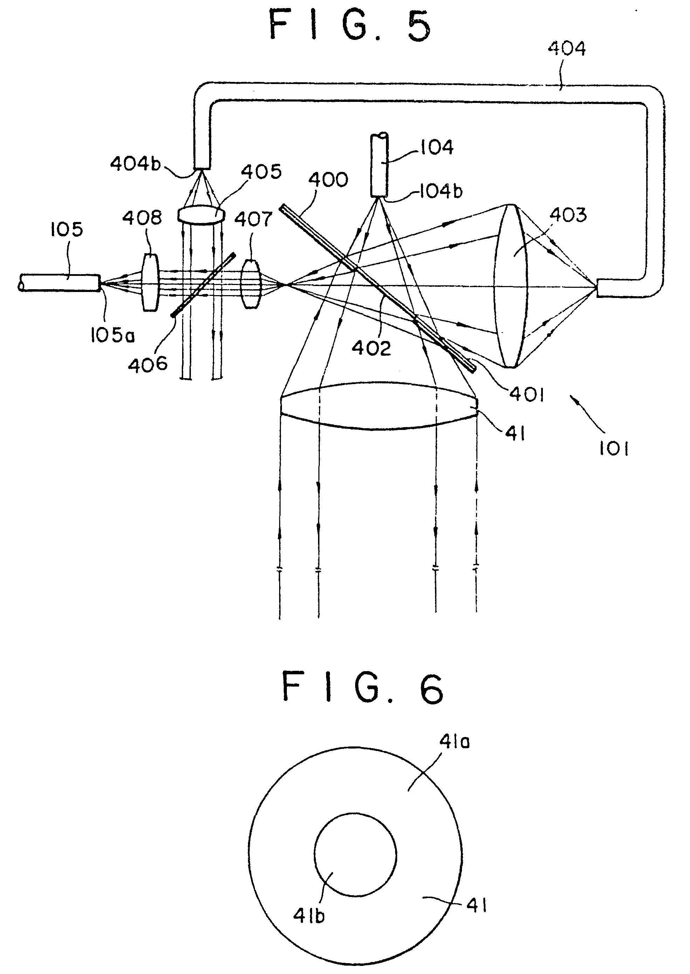

Figs. 4 and 5 show an optical system circuit view of an objective optical system unit 101 showing a third embodiment of the liquid level height-measuring apparatus according to the present invention. According to this embodiment, as shown in Fig. 6, the central portion of an objective lens 41 is used as a round portion 41b for converting the distance-measuring light waves into a parallel light beam and leading it upon the surface S of the liquid level of the crude oil, while the peripheral portion is used as a light-collecting portion 41a for collecting the reflected distance-measuring light waves. In the illustrated embodiment, a distance-measuring light wave selecting means is constituted by an inclined mirror 400, a lens 403, an optical fiber 404, a collimeter 405, a Dichroic mirror 406, and collimeters 407, and 408. The Dichroic mirror 406 is arranged between the collimeter lenses 407 and 408. The inclined mirror 400 has a reflecting face 401A and a Dichroic opening 402. The light wave transmission piping member length-measuring/distance-measuring light waves ejected from an outward optical fiber 404 are reflected both by the reflecting face 401A and the Dichroic opening 402, are led to an incident face 404a of the optical fiber 404 by the lens 403, and are ejected from an ejecting face 404b after being transmitted within the optical fiber 404. The ejected light waves are converted into a parallel light beam by the collimeter lens 405, which parallel light beam is reflected by the Dichroic mirror 406 and is led to a return optical fiber 105 through the collimeter 408. Then, the distance-measuring light waves are transmitted within the return optical fiber 105, and are led to a light receiving element 30.

Only those of the liquid level height-measuring/distance-measuring waves which penetrate the Dichroic opening 402 are led to the round portion 41b of the objective lens 41. Those reflected on the reflecting face 401A are led to the optical fiber 404, and are ejected from the ejecting face 404b to be irradiated to the Dichroic mirror 406 as a parallel light beam. Since the Dichroic mirror 406 functions to penetrate the liquid height-measuring/distance-measuring light waves, they are not led to the return optical fiber 105 to prevent the influence thereof upon the measurement of the distance. The liquid level height-measuring/distance-measuring light waves led to the round portion 41b of the objective lens 41 are reflected on the surfaces of the liquid level of the crude oil and are led to the objective lens 41 as the reflected distance-measuring light waves, which are collected by the light collecting portion 41b of the objective lens 41 and are reflected by the reflecting face 401 B. The reflected light waves are then converted into a parallel light beam by the collimeter 407, which penetrates the Dichroic mirror 406 and is led to the collimeter lens 408. The collimeter lens 408 causes the parallel light beam to form an image at an incident face 105a. Thereafter, the distance-measuring light waves are transmitted within the return optical fiber 105, and are received by a light receiving diode 30.

Although it has been explained in the above-mentioned embodiment that the height of the liquid level is measured on the basis of the difference in phase between the distance-measuring light waves and the reflected distance-measuring light waves, the present invention is also applicable to a liquid level height-measuring apparatus utilizing a light wave distance-meter of a pulse system in which the distance is measured by determining difference in liquid level reaching time of the distance-measuring light waves by use of the distance-measuring light waves and the reflected distance-measuring light waves.

## Claims

1. A liquid level height-measuring apparatus comprising:

a distance-measuring light wave generating means (203a, 203b) for generating distance-measuring light waves modulated at a predetermined modulation frequency;

an objective optical means (101) for irradiating the distance-measuring light waves upon the surface(S) of a liquid level to be distance-measured and collecting reflected distance-measuring light waves reflected on the surface of the liquid level to be distance-measured;

a light receiving means (30) for receiving the reflected distance-measuring light waves led by the objective optical means (101); and

a light wave transmission piping member (102) for optically connecting the distance-measuring light wave generating means (203a, 203b) with the objective optical means (101) to lead the distance-measuring light waves to the objective optical means (101), while optically connecting the objective optical means (101) to the light receiving means (30) to lead the reflected distance-measuring light waves to the light receiving means (30), whereby the height of the liquid level to be distance-measured is measured on the basis of the distance-measuring light waves and the reflected distance-measuring light waves, said distance-measuring light wave generating means (203a, 203b) being adapted to generate distance-measuring light waves for measuring the height (H) of the liquid level and distance-measuring light waves for measuring the length of the light wave transmission piping member (102), both kinds of the distance-measuring light waves being different from each other in terms of wavelength, and said objective optical means (101) being provided with a distance-measuring light wave selecting means (210; 301; 302; 400; 406) for leading the distance-measuring light waves for measuring the height of the liquid level to the surface of the liquid level to be distance-measured, while leading the distance-measuring light waves for measuring the length of the light wave transmission piping member (102) to the light receiving means (30) through the light wave transmission piping member (102) but not to said surface(S).

## Patentanspruch

Vorrichtung zur Messung eines Flüssigkeitsspiegels mit:

Mitteln (203a, 203b) zur Erzeugung von Lichtwellen zur Entfernungsmessung, die mit einer vorgegebenen Modulationsfrequenz moduliert sind;

optischen Objektivmitteln (101) zum Abstrahlen der Lichtwellen zur Entfernungsmessung auf die Oberfläche (S) eines zu messenden Flüssigkeitsspiegels und zum Auffangen der an der Oberfläche (S) des zu messenden Flüssigkeitsspiegels reflektierten Lichtwellen zur Entfernungsmessung;

Lichtempfängermitteln (30) zum Empfangen der reflektierten Lichtwellen zur Entfernungsmessung, die durch die optischen Objektivmittel (101) geleitet werden, und

einem Lichtwellenübertragungsrohrelement (102) zur optischen Verbindung der Mittel (203a, 203b) zur Erzeugung von Lichtwellen zur Entfernungsmessung mit den optischen Objektivmitteln (101), um die Lichtwellen zur Entfernungsmessung zu den optischen Objektivmitteln (101) zu leiten und zur optischen Verbindung der optischen Objektivmittel (101) mit den Lichtempfängermitteln (30), um die reflektierten Lichtwellen zur Entfernungsmessung zu den Lichtempfängermitteln (30) zu leiten, wobei die zu messende Höhe des Flüssigkeitsspiegels auf der Basis der Lichtwellen zur Entfernungsmessung und der reflektierten Lichtwellen zur Entfernungsmessung gemessen wird, wobei die Mittel (203a, 203b) zur Erzeugung von Lichtwellen zur Entfernungsmessung dazu ausgebildet sind, Lichtwellen zur Entfernungsmessung zur Messung der Höhe (H) des Flüssigkeitsspiegels und Lichtwellen zur Entfernungsmessung zur Messung der Länge des Lichtwellenübertragungsrohrelementes (102) zu erzeugen, wobei beide Arten der Lichtwellen zur Entfernungsmessung hinsichtlich ihrer Wellenlänge unterschiedlich zueinander sind, und wobei die optischen Objektivmittel (101) mit Mitteln (210; 301, 302; 400, 406) zur Auswahl von Lichtwellen zur Entfernungsmessung versehen sind, die die Lichtwellen zu Entfernungsmessung zu Messung der Höhe (H) des Flüssigkeitsspiegels auf die Oberfläche (S) des zu messenden Flüssigkeitsspiegels leiten, während sie die Lichtwellen zur Entfernungsmessung zur Messung der Länge des Lichtwellenübertragungsrohrelementes (102) über dasselbe auf die Lichtempfängermittel (30) aber nicht auf die Oberfläche (S) leiten.

**Revendication**

Appareil de mesure de la hauteur de niveau d'un liquide comprenant:

un moyen générateur d'ondes lumineuses de mesure de distance (203a, 203b) pour générer des ondes lumineuses de mesure de distance modulées à une fréquence de modulation prédéterminée;

un moyen optique à objectif (101) pour propager les ondes lumineuses de mesure de distance sur la surface (S) d'un niveau de liquide dont la distance doit être mesurée et pour collecter les ondes lumineuses de mesure de distance réfléchies qui sont réfléchies sur la surface du niveau de liquide dont la distance doit être mesurée;

un moyen récepteur de lumière (30) pour recevoir les ondes lumineuses de mesure de distance réfléchies guidées par le moyen optique à objectif (101);et

un élément de canalisation de transmission d'ondes lumineuses (102) pour relier optiquement le moyen générateur d'ondes lumineuses de mesure de distance (203a, 203b) au moyen optique à objectif (101) afin de guider les ondes lumineuses de mesure de distance jusqu'au moyen optique à objectif (101), tout en reliant optiquement le moyen optique à objectif (101) au moyen récepteur de lumière (30) pour guider les ondes lumineuses de mesure de distance réfléchies jusqu'au moyen récepteur de lumière (30), la hauteur du niveau de liquide dont la distance doit être mesurée étant ainsi mesurée en fonction des ondes lumineuses de mesure de distance et des ondes lumineuses de mesure de distance réfléchies, le moyen générateur d'ondes lumineuses de mesure de distance (203a, 203b) étant agencé pour générer des ondes lumineuses de mesure de distance destinées à la mesure de la hauteur (H) du niveau de liquide et des ondes lumineuses de mesure de distance destinées à la mesure de la longueur de l'élément de canalisation de transmission d'ondes lumineuses (102), les deux types d'ondes lumineuses de mesure de distance étant différents l'un de l'autre en ce qui concerne la longueur d'onde, et le moyen optique à objectif (101) étant pourvu d'un moyen de sélection d'ondes lumineuses de mesure de distance (210; 301, 302; 400, 406) pour guider les ondes lumineuses de mesure de distance destinées à la mesure de la hauteur du niveau de liquide jusqu'à la surface du niveau de liquide dont la distance doit être mesurée, tout en guidant les ondes lumineuses de mesure de distance destinées à la mesure de la longueur de l'élément de canalisation de transmission d'ondes lumineuses (102) jusqu'au moyen récepteur de lumière (30) par l'intermédiaire de l'élément de canalisation de transmission d'ondes lumineuses (102) mais non jusqu'à la surface (S).

1,4

FIG. I

FIG. 2

EP 0 188 393 B1

# F I G. 3    3,4

# F I G. 4

# F I G. 5

# F I G. 6